# FASCICULE DE BREVET EUROPEEN

(11) **EP 0 983 834 B1**
(45) Date de publication et mention de la délivrance du brevet: **18.12.2002**
(21) Numéro de dépôt: 99116203.3
(22) Date de dépôt: 17.08.1999
(51) Int. Cl.: B29C 43/38, B29C 43/36, B29C 33/00, B29D 30/52

(54) **Moule pour bandes de roulement plates**
Form für flache Laufflächen
Mould for flat treads

(30) Priorité: 03.09.1998 FR 9811124
(43) Date de publication de la demande: 08.03.2000
(73) Titulaire: Sociéte de Technologie Michelin, 63000 Clermont-Ferrand Cedex 09 (FR); Michelin Recherche et Technique S.A., 1763 Granges-Paccot (CH)
(72) Inventeur: Pouille, Guy, 63000 Clermont-Ferrand (FR)
(74) Mandataire: Bauvir, Jacques

(56) Documents cités:
- FR-A- 2 742 377
- US-A- 4 772 194
- PATENT ABSTRACTS OF JAPAN vol. 097, no. 001, 31 janvier 1997 (1997-01-31) & JP 08 238624 A (BRIDGESTONE CORP), 17 septembre 1996 (1996-09-17)
- PATENT ABSTRACTS OF JAPAN vol. 098, no. 009, 31 juillet 1998 (1998-07-31) & JP 10 086163 A (OKURA IND CO LTD), 7 avril 1998 (1998-04-07)
- PATENT ABSTRACTS OF JAPAN vol. 016, no. 384 (M-1296), 17 août 1992 (1992-08-17) & JP 04 125118 A (ISUZU MOTORS LTD), 24 avril 1992 (1992-04-24)

## Description

L'invention concerne un moule pour bandes de roulement d'enveloppes de pneumatiques dites "plates", c'est-à-dire destinées à être moulées à plat, notamment pour le rechapage d'enveloppes de pneumatiques.

L'invention concerne plus particulièrement un moule comportant une première et une deuxième parties moulantes définissant respectivement la surface extérieure et la surface intérieure de la bande de roulement, l'une au moins des parties étant déplaçable entre deux positions correspondant à l'ouverture et à la fermeture du moule.

La publication EP-A-0 403 443 décrit un moule pour bande de roulement, comprenant une première et une deuxième parties moulantes respectivement de définition des surfaces extérieure et intérieure de la bande de roulement, ces parties moulantes délimitant l'espace de moulage de la bande de roulement.
Afin d'assurer une pression suffisante et uniforme sur la bande de roulement, il est nécessaire d'ajuster l'espace de moulage au volume de ladite bande de roulement. Mais la phase de moulage commence généralement avant la fermeture complète du moule, ce qui entraîne des risques de fluage du caoutchouc issu de la bande de roulement entre les deux parties moulantes. Ces zones de caoutchouc « emprisonnées » entre les parties moulantes constituent en sortie de moule, des défauts couramment appelés « bavures » qui nécessitent d'être enlevées manuellement.

La publication JP N°64-77390 présente un moule pour bande de roulement plate permettant de faciliter l'opération d'élimination des bavures sur la bande de roulement. Dans ce moule, sont juxtaposées extérieurement aux bords latéraux de la partie moulante définissant la surface extérieure de la bande de roulement, des cavités de réception d'un éventuel trop plein de caoutchouc. Les bords latéraux présentent, de plus, des faces biseautées afin que les bavures issues du moulage présentent une rainure nette délimitant le contour souhaité de la bande de roulement. La réalisation d'un tel moule simplifie donc l'opération d'élimination des bavures, mais ne traite pas la source du problème qui consiste à empêcher la formation des bavures. En effet, même avec une opération facilitée d'élimination des bavures, celles-ci constituent une perte de temps et de matière.

Par ailleurs, dans un moule totalement rigide, la dilatation volumique de la bande de roulement au moment de la vulcanisation peut provoquer une augmentation considérable de pression et des détériorations importantes sur certaines parties du moule.

Une solution consiste à réaliser un contrôle de pression permettant, lorsqu'un seuil prédéterminé a été atteint, de laisser les deux parties moulantes s'écarter très légèrement l'une de l'autre, par exemple par une diminution de la pression extérieure exercée sur la partie moulante déplaçable, et ainsi de réaliser une extension de l'espace de moulage dans une direction parallèle à un plan transversal de la bande de roulement. Cependant lors d'une telle expansion, du caoutchouc issu de la bande de roulement peut fluer à l'interface des deux parties moulantes provoquant à nouveau l'apparition de bavures.

L'invention vise à pallier l'ensemble des difficultés précédentes.

Dans la suite, on désignera par « position fermée du moule », la position de fermeture complète du moule et par « position entrouverte du moule », une position du moule faiblement écartée de la position de fermeture du moule dans une direction parallèle à un plan transversal de la bande de roulement, l'expression « faiblement écartée » correspondant à une ouverture du moule de l'ordre de quelques millimètres.

Selon l'invention, le moule pour bandes de roulement plates d'enveloppes de pneumatiques comprend une première et une deuxième parties moulantes définissant respectivement la surface extérieure et la surface intérieure d'une bande de roulement, l'une au moins des parties moulantes étant déplaçable entre deux positions correspondant à l'ouverture et la fermeture du moule, et est tel qu'une des parties moulantes fixée sur un plateau de presse, porte au moins un élément déformable élastiquement assurant le moulage des bords longitudinaux de la surface concernée de la bande de roulement, et susceptible de réaliser et de maintenir une liaison étanche entre les deux parties moulantes entre la position fermée et une position entrouverte du moule, l'élément déformable élastiquement étant monté précontraint vers l'autre partie moulante par l'intermédiaire de moyens de compression fixés entre ledit élément déformable élastiquement et le plateau de presse.

Ainsi ce moule permet d'obtenir des bandes de roulement sans bavures entre les parties moulantes, quelle que soit l'origine de ces dernières : issues du moulage à la fermeture du moule ou de la vulcanisation. Bien entendu, pour le fonctionnement optimum du moule, il est important d'avoir une grande précision, telle qu'une tolérance de plus ou moins 1,5%, du volume de caoutchouc entrant dans le moule.

L'invention a donc pour objet un moule réalisant une liaison étanche des parties moulantes grâce à la déformation élastique d'un élément de moulage, lors de la fermeture du moule c'est-à-dire dès le début du moulage, donc avant la fermeture complète du moule et lorsque l'on procède à un léger écartement d'une des parties moulantes au moment de la vulcanisation.

D'autres caractéristiques et avantages de l'invention apparaîtront à la lecture d'un exemple de réalisation d'un moule conforme à l'invention, en référence aux dessins dans lesquels :
- la figure 1 est une coupe transversale partielle du moule en position fermée,
- la figure 2 est une coupe transversale partielle du moule représenté à la figure 1, en position entrouverte.

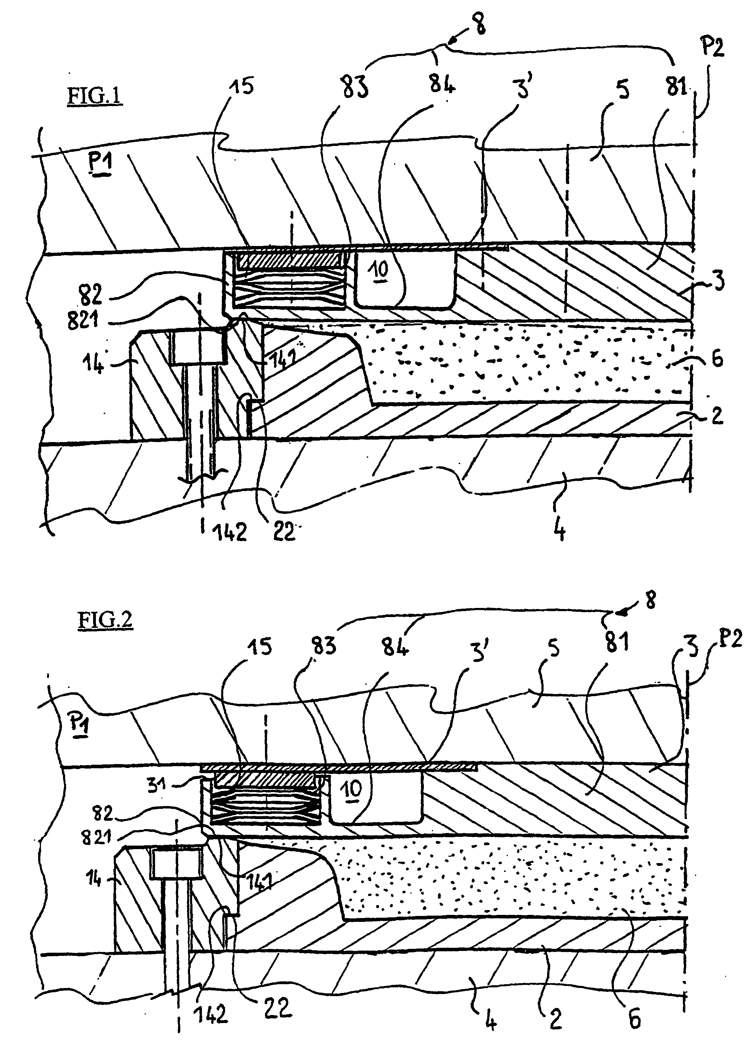

Selon la figure 1, le moule 1 comprend deux parties moulantes 2 et 3 respectivement solidarisées à un plateau de presse inférieur 4 et à un plateau de presse supérieur 5. La première partie moulante inférieure 2 définit la surface extérieure de la bande de roulement alors que la deuxième partie moulante supérieure 3 définit la surface intérieure de la bande de roulement.

La forme de l'espace de moulage représenté sur la figure 1 correspond au moulage d'une bande de roulement ayant des bords longitudinaux avec « ailes » latérales. Cependant ces formes de moulage sont données à titre d'exemple et ne sauraient constituer une limitation de l'invention, l'invention pouvant, en effet, s'appliquer au moulage de bandes plates de roulement ayant des bords longitudinaux avec ou sans « ailes» latérales et quelle que soit la forme de ces dernières.

Des moyens classiques non représentés, tels que des systèmes vis-écrou, permettant de solidariser chaque partie moulante avec le plateau de presse correspondant, sont répartis régulièrement le long des parties moulantes afin d'assurer une bonne liaison entre lesdits parties moulantes et les plateaux.

De façon avantageuse, on peut réaliser chaque partie moulante sous forme de secteurs jointifs respectivement couplés au plateau correspondant.

Le plateau inférieur 4 est fixe alors que le plateau supérieur 5 est déplaçable parallèlement à un plan transversal P1, c'est-à-dire verticalement sur les figures, afin de permettre l'ouverture et la fermeture du moule par le déplacement de la partie moulante supérieure 3, ainsi que d'atteindre des positions intermédiaires. Pour obtenir le mouvement du plateau supérieur 5, on utilise de façon classique tous moyens appropriés tels que des vérins mécaniques, hydrauliques ou pneumatiques.

Il apparaîtra clairement à la lecture de la suite de la description qu'on peut prévoir indifféremment une partie moulante supérieure fixe et une partie moulante inférieure mobile sans modifier l'agencement ou le principe de fonctionnement de l'invention.

Le moule 1 étant symétrique par rapport au plan médian longitudinal P2, on se limitera à décrire un des côtés du moule 1 situé à gauche par rapport au plan P2, tel que représenté sur les figures 1 et 2, l'autre côté du moule se déduisant alors aisément par symétrie.

Pour chaque bord longitudinal de moulage de la bande de roulement, le moule 1 comporte un élément déformable élastiquement 8 porté par la partie moulante supérieure 3, susceptible de réaliser entre les deux parties moulantes 2 et 3 une liaison étanche en position fermée du moule 1 et de maintenir cette liaison étanche jusqu'à la position entrouverte du moule, que ce soit pendant l'opération de fermeture du moule ou lors de la légère réouverture du moule. Cet élément déformable élastiquement 8 assure, de plus, le moulage des bords longitudinaux de la surface concernée de la bande de roulement.

La disposition d'élément déformable élastiquement au niveau des bords longitudinaux du moule présente l'avantage de ne modifier que très faiblement l'épaisseur des bords longitudinaux de la bande de roulement malgré la variation du volume de la cavité 6.

On pourrait également envisager que les éléments déformables soient portés par la partie moulante inférieure 2, définissant ainsi le moulage des bords longitudinaux de la surface extérieure de la bande de roulement. Cependant la surface extérieure de la bande de roulement nécessitant généralement une grande précision de sculpture, des déformations au niveau des bords longitudinaux de la surface extérieure risqueraient de se transmettre à la zone centrale de ladite surface. Par conséquent, il semble préférable de ne pas modifier le moulage de la surface extérieure de la bande de roulement en rendant mobile, par la présence des éléments déformables 8, une partie de la partie moulante inférieure 2.

L'élément déformable élastiquement 8 constitue entièrement la partie moulante 3 avec une zone centrale 81 rigidement fixée au plateau de presse supérieur 5 et des bords longitudinaux flexibles 82 par rapport audit plateau de presse. Cependant on peut imaginer également que deux éléments déformables élastiquement se substituent respectivement aux bords longitudinaux de la partie moulante 3, étant rapportés par rapport à une zone centrale de cette dernière.

L'extrémité 82 de l'élément déformable élastiquement 8 porte une surface 821 de contact avec une surface 141 portée par un support 14 prolongeant la partie moulante inférieure 2. Le support 14 et la partie moulante inférieure 2 coopèrent par leurs épaulements respectifs 142 et 22. On peut bien entendu envisager que le support 14 et la partie moulante 2 forment une seule pièce.

L'extrémité 82 comprend au moins une cavité 83 à l'intérieur de laquelle sont localisés des moyens de compression tels que des rondelles élastiques 15 de compression montées entre la surface intérieure de la cavité 83 et le plateau supérieur 5. Ces rondelles 15 exercent une poussée vers la partie moulante inférieure 2 et permettent ainsi de précontraindre l'extrémité 82 de sorte qu'en position de repos correspondant à la position ouverte du moule 1, l'extrémité 82 est fléchie vers la partie moulante inférieure 2. Les moyens de compression garantissent le positionnement de l'élément déformable pour assurer l'étanchéité.

Afin d'éviter une éventuelle sortie des rondelles 15 lors du démontage de la partie moulante supérieure 3, on peut prévoir une plaque de recouvrement 3' fixée sur ledit élément 3.

Préférentiellement l'élément déformable élastiquement 8 porte de telles cavités 83 régulièrement réparties sur sa longueur afin que la déformation de l'extrémité 82 soit uniforme sur toute sa longueur.

De plus, avantageusement on prévoit une cavité longitudinale 84 le long de l'élément 8 afin de délimiter un espace de flexion 10 entre le plateau supérieur 5 (ou la plaque de recouvrement 3', le cas échéant) et la partie moulante 3. Cette disposition favorise la flexion de chaque extrémité 82 qui se présente, au niveau de la cavité 84, sous forme d'une lame élastique.

Dans ce qui suit, on décrira succinctement le fonctionnement du moule 1 entre le début du moulage d'une bande de roulement et la fin de la vulcanisation, en référence aux figures 1 et 2 pour un seul bord longitudinal de la bande de roulement. Cependant, il est clair que le fonctionnement du moule de l'autre côté du plan médian longitudinal P2, est symétrique et simultané à celui qui va être décrit.

Cette description sera faite en considérant que le volume du caoutchouc utilisé est situé dans les limites inférieures de la tolérance admise (-1,5%), le fonctionnement pour d'autres volumes, en restant dans les limites de tolérance, se déduisant aisément de ce cas limite.

Une bande de caoutchouc ayant été déposée dans le moule 1, on procède à la fermeture dudit moule en faisant descendre la partie moulante supérieure 3 grâce aux moyens mécanique, hydrauliques ou pneumatiques évoqués précédemment et s'exerçant sur le plateau supérieur 5.

Lors du mouvement de descente de la partie moulante supérieure 3, la surface 821 de l'extrémité 82 vient au contact avec la surface 141 du support 14 en réalisant une liaison étanche entre les deux parties moulantes 2 et 3 avant la fermeture du moule 1; la phase de montée en pression aux extrémités de la bande de roulement n'ayant pas encore commencée, elle n'engendrera pas de formation de bavures.

La partie moulante 3 est ensuite amenée dans sa position fermée en appui sur le caoutchouc et dans laquelle la déformation de l'extrémité 82 a diminué alors que les rondelles 15 sont comprimées, comme le montre la figure 1.

Lorsque le caoutchouc commence à monter en pression et que le moulage commence, le caoutchouc ne peut donc pas fluer entre les deux parties moulantes 2 et 3.

Suite à la fermeture du moule 1, le caoutchouc est soumis à une augmentation de température jusqu'à la température de vulcanisation qui peut être de l'ordre de 160°C. Le volume de caoutchouc dans la cavité 6 correspondant sensiblement au volume de ladite cavité, la dilatation du caoutchouc entraîne une augmentation progressive de la pression interne dans la cavité 6.

Au delà d'un seuil de pression donné, on autorise, par tout dispositif approprié, un léger recul de la partie moulante supérieure 3 vers le haut jusqu'à la position entrouverte, comme représenté sur la figure 2. L'étanchéité des contacts entre les parties moulantes est maintenue grâce à l'extrémité 82 qui reste au contact du support 14 sous l'effort des rondelles de compression 15 et de la raideur résiduelle de la lame élastique que forme l'élément 8 au niveau de la cavité 84.

Ainsi tout se passe comme si la plaque 8 suivait le mouvement de recul de la partie moulante supérieure 3 en continuant d'assurer l'étanchéité entre les deux parties moulantes'et en réalisant une expansion verticale du volume de la cavité 6 comme le montre la figure 2, sans que le caoutchouc ne puisse fluer entre les deux parties moulantes 2 et 3.

La bande de roulement sans bavures obtenue présente une surface intérieure ayant une légère convexité qui ne semble pas poser de difficulté particulière lors de son application sur la carcasse de pneumatique.

## Revendications

1. Moule (1) pour bandes de roulement plates d'enveloppes de pneumatiques, qui comprend une première (2) et une deuxième (3) parties moulantes définissant respectivement la surface extérieure et la surface intérieure d'une bande de roulement, l'une au moins des parties moulantes (3) étant déplaçable entre deux positions correspondant à l'ouverture et la fermeture du moule (1), **caractérisé en ce qu'**une des parties moulantes (3) fixée sur un plateau de presse (5), porte au moins un élément déformable élastiquement (8) assurant le moulage des bords longitudinaux de la surface concernée de la bande de roulement, et susceptible, grâce à sa déformation correspondant au déplacement de la surface (821) de contact avec l'autre partie moulante (2), portée par ledit élément, dans une direction parallèle à un plan transversal (P1) de la bande de roulement, de réaliser et de maintenir une liaison étanche entre les deux parties moulantes (2, 3) entre la position fermée et une position faiblement écartée de la position de fermeture du moule (1) dans une direction parallèle à un plan transversal (P1) de la bande de roulement, et **en ce que** l'élément déformable élastiquement (8) est monté précontraint vers l'autre partie moulante (2) par l'intermédiaire de moyens de compression (15) fixés entre ledit élément déformable élastiquement (8) et le plateau de presse (5).

2. Moule selon la revendication 1, dans lequel l'élément déformable élastiquement (8) est porté par la partie moulante (3) définissant la surface intérieure de la bande de roulement.

3. Moule selon l'une quelconque des revendications 1 ou 2, dans lequel l'élément déformable élastiquement (8) est constitué par un matériau métallique.

4. Moule selon l'une quelconque des revendications 1 à 3, dans lequel l'élément déformable élastiquement (8) porte une cavité longitudinale (84) délimitant un espace de flexion (10) dudit élément déformable.

## Patentansprüche

1. Formwerkzeug (1) für flache Laufflächen von Reifenmänteln, mit einen ersten (2) und einen zweiten (3), abformenden Teil, die jeweils die Außenoberfläche und die Innenoberfläche einer Lauffläche definieren, wobei mindestens eines der beiden abformenden Teile (3) zwischen zwei Lagen versetzbar ist, die dem Öffnen und dem Schließen des Formwerkzeugs (1) entsprechen, **dadurch gekennzeichnet, daß** eines der abformenden Teile (3), das auf einer Pressenplatte (5) befestigt ist, mindestens ein elastisch verformbares Element (8) trägt, das das Abformen der Längsränder der betreffenden Oberfläche der Lauffläche sicherstellt und in der Lage ist, dank seiner Verformung, die dem Versetzen der Oberfläche (821) der Berührung mit dem anderen, abformenden Teil (2) entspricht, die vom genannten Element getragen wird, in einer Richtung parallel zu einer Querebene (P1) der Lauffläche, eine dichte Verbindung zwischen den beiden abformenden Teilen (2, 3) zwischen der geschlossenen Lage und einer Lage herzustellen und aufrechtzuerhalten, die von der Schüeßlage des Formwerkzeugs (1) in einer Richtung parallel zur Querebene (P1) der Lauffläche leicht entfernt ist, und daß das elastisch verformbare Element (8) zum anderen abformenden Teil (2) hin mittels Druckmitteln (15) vorgespannt angebracht ist, die zwischen dem elastisch verformbaren Element (8) und der Pressenplatte (5) befestigt sind.

2. Formwerkzeug nach Anspruch 1, in welchem das elastisch verformbare Element (8) von dem abformenden Teil (3) getragen ist, der die Innenoberfläche der Lauffläche definiert.

3. Formwerkzeug nach irgendeinem der Ansprüche 2 oder 3, worin das elastisch verformbare Element (8) aus einem metallischen Material gebildet ist.

4. Formwerkzeug nach irgendeinem der Ansprüche 1 bis 3, worin das elastisch verformbare Element (8) einen Längs-Hohlraum (84) trägt, der einen Verbiegungsraum (10) für das genannte, verformbare Element begrenzt.

## Claims

1. A mould (1) for flat treads of tyres which comprises a first (2) and a second (3) moulding part respectively defining the outer surface and the inner surface of a tread, at least one of the moulding parts (3) being moveable between two positions corresponding to the opening and closing of the mould (1), **characterised in that** one of the moulding parts (3) fixed to a press plate (5) bears at least one elastically deformable element (8) ensuring moulding of the longitudinal edges of the tread surface concerned and capable, due to its deformation corresponding to the displacement of the contact surface (821) with the other moulding part (2), borne by said element, in a direction parallel to a transverse plane (P1) of the tread, of forming and maintaining a tight connection between the two moulding parts (2, 3) between the closed position and a position slightly distanced from the closed position of the mould (1) in a direction parallel to a transverse plane (P1) of the tread, and **in that** the elastically deformable element (8) is mounted pre-stressed towards the other moulding part (2) by means of compression means (15) fastened between said elastically deformable element (8) and the press plate (5).

2. A mould according to Claim 1, in which the elastically deformable element (8) is borne by the moulding part (3) defining the inner surface of the tread.

3. A mould according to any one of Claims 1 or 2, in which the elastically deformable element (8) is constituted by a metallic material.

4. A mould according to any one of Claims 1 to 3, in which the elastically deformable element (8) bears a longitudinal cavity (84) defining a flexion space (10) of said deformable element.
